# EUROPEAN PATENT APPLICATION

(11) **EP 2 320 703 A1**
(43) Date of publication of application: **11.05.2011**
(21) Application number: 09447055.6
(22) Date of filing: 05.11.2009
(51) Int. Cl.: H04W 48/18

(54) **A method for selecting and reselecting a cell based on number of services available**

(71) Applicant: Thomson Telecom Belgium, 2650 Edegem (BE); THOMSON TELEVISION COMPONENTS FRANCE, 92648 Boulogne Cedex (FR)
(72) Inventor: Yoshizawa Takahito,, 2650 Edegem (BE); Skalli Habiba,, 2650 Edegem (BE)
(74) Representative: Berthier, Karine

(57) **Abstract**

The present invention concerns a femtocell, and a method at a cellular device for selecting and reselecting a cell, the cellular device being camped on a first cell corresponding to a cellular technology, the cell enabling said cellular device to access at least one service, the method comprising the step of scanning if another cell corresponding to a same cellular technology is available in the area of the cellular device and if a second cell is available and enables the cellular device to access more services than in first cell, reselecting to the second cell.

## Description

### FIELD OF THE INVENTION

The present invention relates generally to cell selection and in particular to a method for efficiently selecting a cell.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The general procedures for cell selection and reselection are specified in 3GPP TS. 23.122 standard version 9.0.0 (2009-09) on 3rd Generation Partnership Project; Technical Specification Group Core Network and Terminals; Non-Access-Stratum (NAS) functions related to Mobile Station (MS) in idle mode (Release 9) and noted 23.122 hereinafter, and 3GPP TS.25.304 standard, version 8.6.0 (2009-06) on 3rd Generation Partnership Project; Technical Specification Group Radio Access Network; User Equipment (UE) procedures in idle mode and procedures for cell reselection in connected mode (Release 8), and noted 25.304 hereinafter. According to the standard documents, when a cellular handsets, also called User Equipment or UE, is switched on, it attempts to make contact with a public land mobile network (PLMN). The particular PLMN to be contacted may be selected either automatically or manually. The UE looks for a suitable cell of the chosen PLMN and chooses that cell to provide available services, and tunes to its control channel. This choosing is known as "camping on the cell ". The Management System then registers its presence in the registration area of the chosen cell if necessary, by means of a location registration (LR), GPRS attach or IMSI attach procedure, IMSI meaning the International Mobile Subscriber Identity. If the UE loses coverage of a cell, or finds a more suitable cell, it reselects onto the most suitable cell of the selected PLMN and camps on that cell. If the new cell is in a different registration area, an LR request is performed.

When camped on a cell, the UE regularly searches for a better cell according to the cell reselection criteria. If a better cell is found, that cell is selected. The change of cell may imply a change of Radio Access Technology (RAT) such as changing from UMTS to GSM and vice versa. Details on performance requirements for cell reselection can be found in 3GPP TS 25.133 standard version 9.1.0 (2009-09) on 3rd Generation Partnership Project; Technical Specification Group Radio Access Network; Requirements for support of radio resource management (FDD); (Release 9).

According to 3GPP TS 25.304, for initial cell selection, the UE shall scan RF channels in the Universal Terrestrial Radio Access (UTRA) bands according to its capabilities to find a suitable cell. On each RF carrier, the UE needs only to search for the strongest cell. Once a suitable cell is found this cell is selected. Alternatively, the UE can use stored information of carrier frequencies and optionally also information on cell parameters, e.g. scrambling codes, from previously received measurement control information elements. Once the UE has found a suitable cell the UE shall select it. If no suitable cell is found the Initial cell selection procedure shall be started.

The cell selection and reselection criteria take into consideration only the RF link quality as the main criterion. This is quite limitative when a UE is attached to a 'preferred' cell. In particular, a UE registered to a home femtocell may prefer to be camped to that femtocell as long as possible, even if it gets better a RF link quality with neighbor femtocells or macrocells.

In 3GPP, there is an existing concept called Hierarchical Cell Structure (HCS). This solution is designed to "encourage" the UE to camp on, or stay camped on, the "proper' cell by taking the UE's condition into account. Here, "proper cell" implies a cell selection that is not only based on the RF signal quality but in addition to it. Specifically for Home NodeB (HNB) and Home E-Node B, noted HeNB, HCS may be a useful mechanism. Collectively, H(e)NB is a shorthand notation to refer to both HNB and HeNB. However HCS is not guaranteed to work when it is applied to H(e)NB. This is due to the fact that HCS was originally designed to differentiate the cell (re- )selection based on different UE speeds, such stationary user versus user in a car on a highway.

### SUMMARY OF THE INVENTION

The present invention attempts to remedy at least some of the concerns connected with (re)selection in the prior art, by using criterion that optimizes reselection.

To this end, the invention relates to a method at a cellular device for reselecting a cell, the cellular device being camped on a first cell corresponding to a cellular technology, the cell enabling the cellular device to access at least one service.

According to the invention, the method comprises the steps of scanning if another cell corresponding to a same cellular technology is available in the area of the cellular device; and if a second cell is available and enables the cellular device to access more services than in first cell, reselecting to the second cell.

According to an embodiment, the method comprises a step of, if a second cell is available, enables the cellular device to access a same number of services than in first cell, and enables the cellular device to access to services quality levels better than in the first cell, reselecting to the second cell.

According to an embodiment, the method comprises a step of reselecting to a second cell that corresponds to a Closed Subscriber Group to which the cellular device is a member.

The invention also concerns a method at a cellular device for selecting a cell corresponding to a cellular technology, the cell enabling the cellular device to access at least one service, the method comprising the steps of scanning if a cell is available in the area of the cellular device; and if more than one cell are available, selecting to the cell enabling the cellular device to access most services.

According to an embodiment, the method comprises a step of, if more than one cell are available, and enable the cellular device to access a same number of services, selecting to the cell enabling the device to access the best services quality levels.

According to an embodiment, the method comprises a step of selecting to the cell that corresponds to a Closed Subscriber Group to which the cellular device is a member.

Another object of the invention is a cellular device comprising a selector adapted to scan if a cell corresponding to a cellular technology is available in the area of the cellular device, the cell enabling the cellular device to access at least one service, and if more than one cell are available, to select the cell enabling the cellular device to access most services.

According to an embodiment, the selector is adapted to, when the cellular device is camped on a first cell, scan if a second cell is available in the area of the cellular device, and if a second cell is available and offers a service quality level higher than the first cell to the cellular device, reselect to the cell.

Advantageously the generalized cell (re-)selection introduces means for the UE to do the cell selection and reselection in ways that can take additional factors into consideration, in addition to the RF condition. This leads to more UE specific behavior and thus enhances reliability and efficiency of network resource at the system level. This makes it possible to optimize the available resources and gives priorities in the access to the cell based on important criteria for the femtocell use case, for instance the cell ownership, desired service level, and the Closed Subscriber Group (CSG) membership. As a result, the cell (re-)selection decision may be different from one UE to another based on their uniqueness (CSG-ID, owner relationship, etc.). In other words, doing the selection and re-selection is adapted to the specific needs of the service requested, on the current circumstances and needs of the UE, or ultimately the end user as the owner of the UE.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 illustrates the Closed Subscriber Group concept;
- Figure 2 illustrates the Open cell, Closed cell, Hybrid cell concepts;
- Figure 3 shows the Closed Subscriber Group white list;
- Figure 4 illustrates access control for a CSG capable UE;
- Figure 5 illustrates access control for a non-CSG capable UE;
- Figure 6 illustrates a reselection according to the embodiment;
- Figure 7 shows a system according to the embodiment, applied to the femtocell environment;
- Figure 8 shows a system according to the embodiment, applied to the macrocell environment;
- Figure 9 is a block diagram of a femtocell according to the embodiment;
- Figure 10 is a block diagram of a User Equipment according to the embodiment
- Figure 11 illustrates a cell selection using CSG concept.

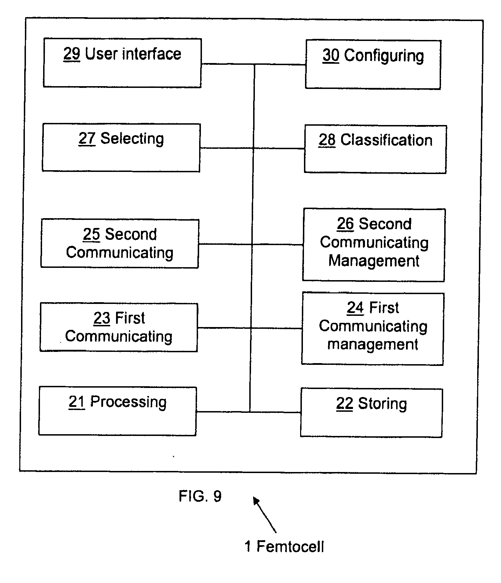

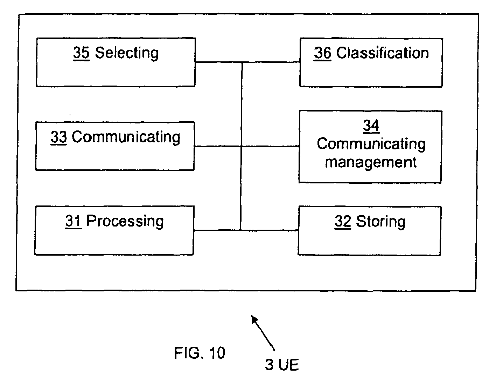

In Figures 9 and 10, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of a femtocell but the invention is not limited to this particular environment and may be applied within other cellular systems.

General aspects and concepts being introduced in 3GPP specification are now introduced. They are believed to help the reader to better appreciate the embodiments of the invention.

The Closed Subscriber Group (CSG) concept has been specified in the 3GPP UMTS Specification Release 8, noted Rel.8 hereinafter. In both 3G and 4G, access to services can be provided either via UMTS Terrestrial Radio Access Network, (UTRAN) or Evolved UTRAN Node B cellular base stations as well as through Home Node B (HNB) and Home E-Node B (HeNB). The H(e)NB provides services either only to a Closed Subscriber Group (CSG) or to other mobile subscribers. The H(e)NB is connected to the operator core network via an broadband network (i.e. xDSL). H(e)NB can be either one of the three following types of cells:
- Open access: H(e)NB operates as a normal cell, i.e. non-CSG cell
- Closed access: H(e)NB operates as a CSG cell
- Hybrid access: H(e)NB operates as a CSG cell where at the same time, non-CSG members are allowed access in which case UE access is first-come-first-served basis. Within this context it is possible for the network to set different criteria for access control in a CSG cell for CSG and non-CSG members.

On the other hand, the User Equipment (UE) can either be:
- CSG-capable UE, (i.e. 3GPP Release 8 UEs that supports this function). UEs with this capability have a "whitelist" in their Universal Subscriber Identity Module (USIM) which contains a list of CSG IDs for which this UE is allowed to access.
- Non-CSG-capable UE (pre-Release 8 legacy UEs) that has no CSG concept and doesn't understand CSG related info in Broadcast Control Channel (BCCH).

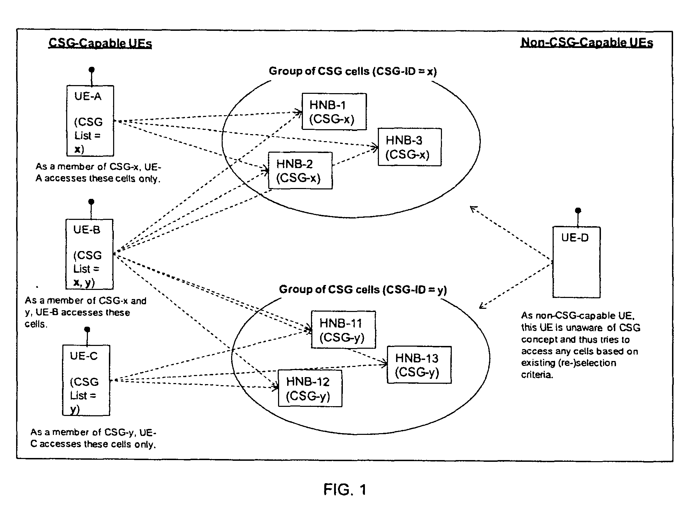

   Figure 1 illustrates the CSG concept and explains how the CSG capable UEs (UE-A, UE-B, and UE-C) would camp on the specific CSG cells that belong to the CSG cells that belong to the group listed in the UEs whitelist. While the non-CSG capable UEs (UE-D) will attempt to access any cell.

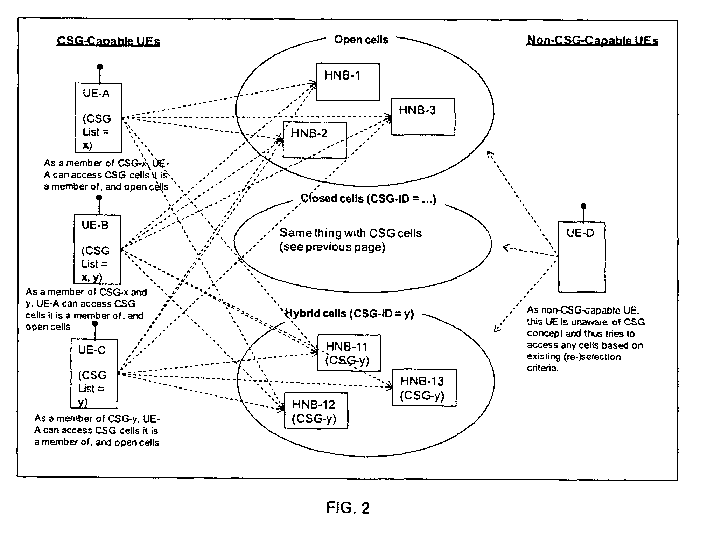

   Figure 2 illustrates how the open cells (HNB-1, HNB-2, HNB-3) have an open access to all types of UEs (non-CSG-capable, and CSG capable). As described hereinbefore the closed cells (or CSG cells) can grant access only to the CSG capable UEs that are allowed to access them (i.e. the UEs's whitelist contain the cell CSG group id). Finally, the hybrid cells (HNB-11, HNB-12, HNB-13), allow access to the CSG capable UEs that are CSG members and also allow access to non-CSG members.

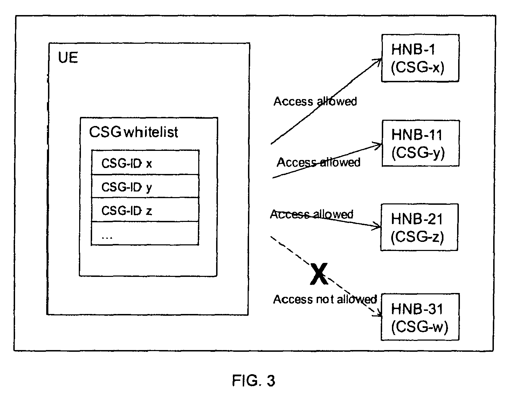

   Figure 3 illustrates how the CSG "whitelist" in UE USIM controls the UE's access to the cells, for instance:
- UE becomes aware of which cell it is allowed access to
- UE does not attempt cell access for those that it is not allowed, and
- CN updates whitelist of UEs based on O&M action (HNB owner adding new user, removing existing user, etc.)

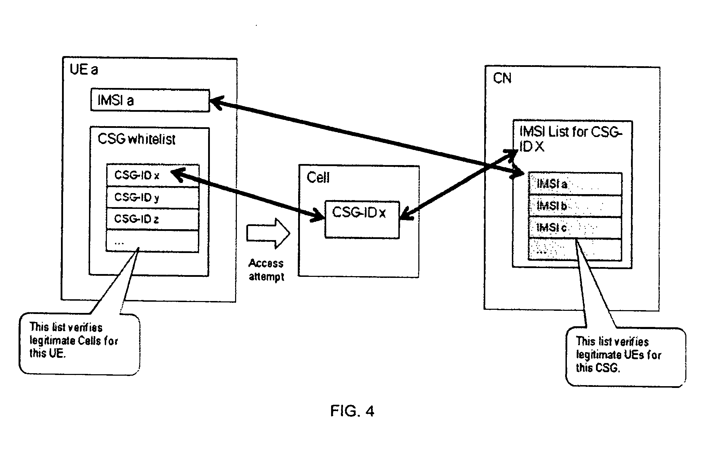

   Figure 4 illustrates access control for a CSG capable UE. It shows how the network side (CN) checks the UE against accessed cell and may allow or reject service. For CSG-capable UE, there's already a check on UE itself, but current 3GPP Release 9 working assumption is that network side has to do it anyway.

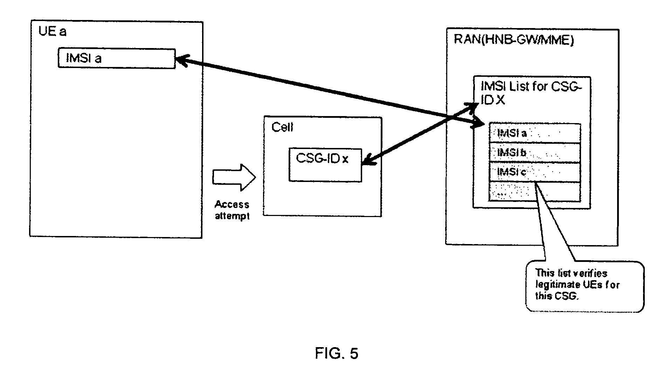

   Figure 5 illustrates access control for non-CSG capable UE. It shows how the network side (HNB-GW / MME) checks the UE against accessed cell and allows or reject service. Because non-CSG-capable UE has no CSG concept, network side is the only place to enforce this checking.

In summary, Table 1 shows the different interactions between the type of UE and type of cells, and table 2 shows the Access control behavior at RAN (HNB-GW, MME/HeNB-GW) or CN.

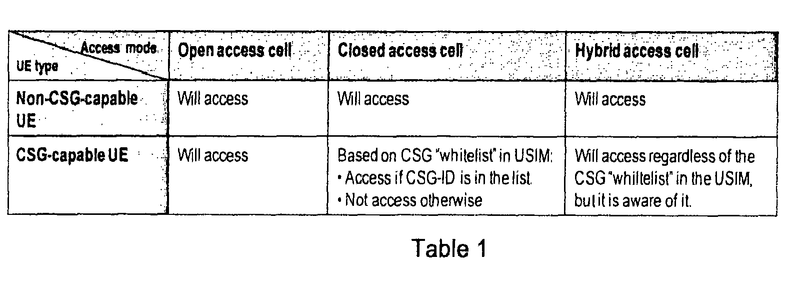

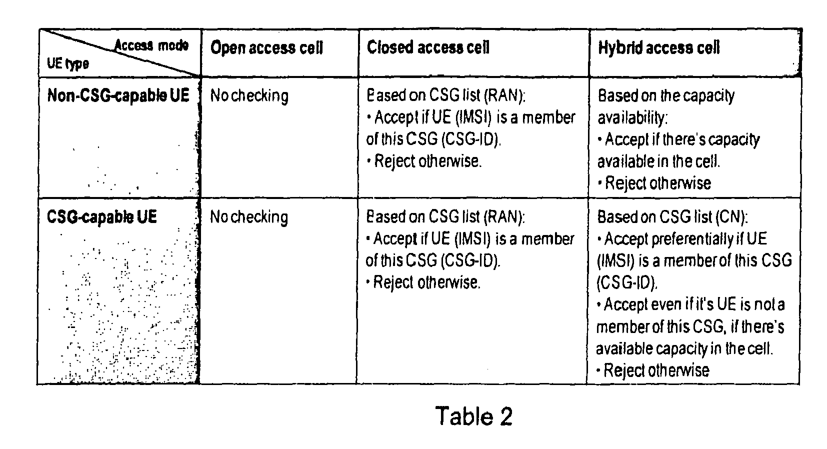

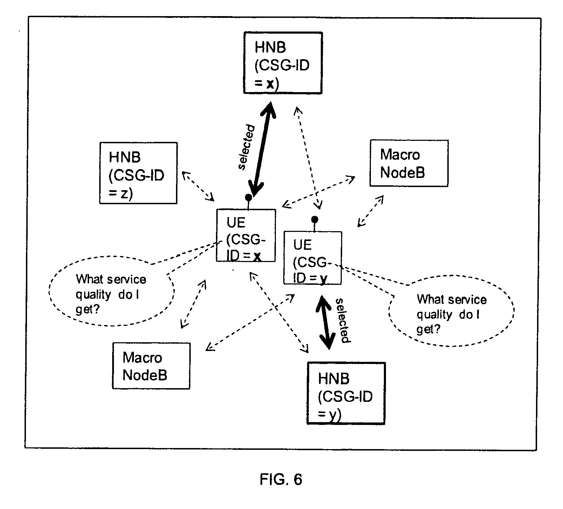

The cell selection according to the embodiment is now described. Figure 6 is an example of the embodiment when two UEs (one with CSG-id=x and another with CSG-id=y) are located in the vicinity of more than one cells and have to select a cell to camp on. Using this strategy, the cell selection is based on the service quality level, the UE with (CSG-id=x) will camp on HNB with (CSG-id=x). And UE (CSG-id=y) will camp on HNB with (CSG-id=y). The reason the selection or reselection is done so is that the UE that is member of a CSG group (i.e. the CSG group id is listed in the UE's whitelist). This allows the UE which is CSG member to camp on the femtocell and not on the macrocell, and this alleviates the deficiencies of the regular HCS strategy. And, camping on the HNB that belongs to the UE CSG group id gives the UE privileges on access to the HNB resources, such as bandwidth capacity, data rate etc.

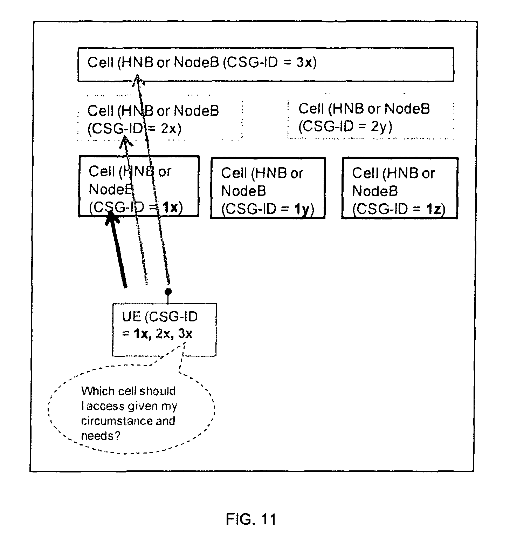

Having such level of criteria makes the HCS concept, and takes into consideration only the UE speed, become expanded to other dimensions for taking decisions on cell selection and reselection as illustrated in Figure 11. Given that more than a cell are available for a UE to camp on, the general cell (re-)selection functionality can be expanded to take various criteria into account, in addition to the RF condition, UE speed, and CSG membership information, and can be designed to allow the UE to do the selection and reselection based on given the actual circumstances and needs above and beyond the existing selection criteria defined in 3GPP specifications.

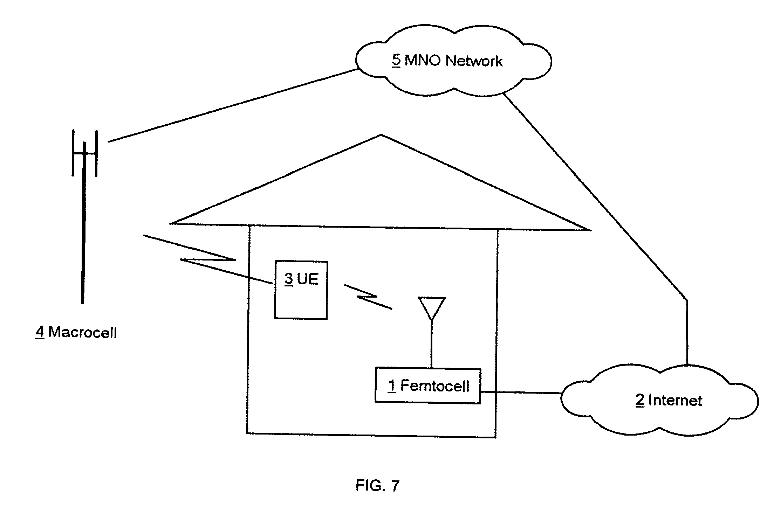

The system according to the present embodiment is illustrated in figure 7. The femtocell 1 is connected to the service provider network, also called the mobile network operator (MNO) network 5, through a broadband connection. In the embodiment, the broadband connection is a digital subscriber line connection that provides connection to the Internet 2. The femtocell 1 located in the home environment is connected to the Internet 2 through a digital subscriber line gateway not represented. The femtocell device is a standalone device. Of course the femtocell might also be embedded in such a gateway. The femtocell enables to connect a UMTS compatible UE 3. When connected to the femtocell, the UE accesses the MNO network through the Internet. The UE 3 may also be connected to the MNO network through a macrocell 4 in a manner well known per se.

The femtocell device according to the embodiment is represented in figure 9. It comprises a first communicating module 23 for emitting and receiving in the UMTS network. In particular the first communicating module is a 3G radio emitter-receiver. More generally, this is a mobile networking interface. A first communicating management module 24 is adapted to perform the management and control functions of the first communicating module. The femtocell device also comprises a second communicating module 25 for emitting and receiving to the mobile network. A second communicating management module 26 is adapted to perform the management and control functions of the second communicating module. In the embodiment, the broadband network is of digital subscriber line technology. Of course it could also be any other type of broadband connection, such as a cable, fiber optics or satellite. The femtocell device also comprises storing module 22 such as a memory for storing among others the list of UE identifiers as indicated hereinafter. The femtocell device also comprises a processor 21 that is adapted to execute the selection and reselection of the embodiment.

The femtocell according to the embodiment comprises a classification module 28 for classifying the UEs with their CSG group membership. The femtocell also comprises a selecting module 27 adapted to perform selection and reselection according to the embodiment.

A UE 3 according to the embodiment is represented in figure 10. It comprises a communicating module 33 for emitting and receiving in the UMTS network. In particular the communicating module is a 3G radio emitter-receiver. More generally, this is a mobile networking interface. A communicating management module 34 is adapted to perform the management and control functions of the communicating module. The UE also comprises storing module 32 such as a memory for storing among others the list of UE identifiers as indicated hereinafter. The UE also comprises a processor 31 that is adapted to execute the selection and reselection of the embodiment. In particular the UE of the embodiment comprises a selecting module 35 adapted to perform selection and reselection as indicated hereinabove. It also comprises a classification module 36 adapted to manage the CSG whitelist as indicated hereinabove. More generally, the classification module manages the UE capabilities that may be taken into account for cell (re)selection.

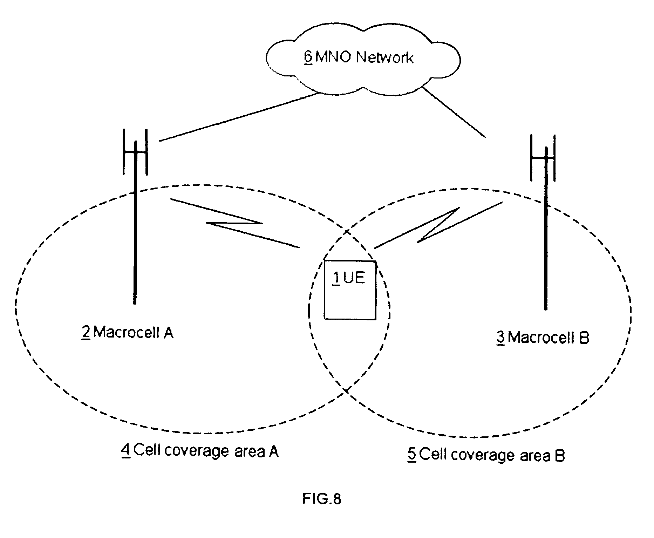

The embodiment hereinabove applies to a femtocell. The same mechanism might be alternatively applied to the macrocell environment in which the cell (re-)selection by the UE is carried out between two macrocells, as illustrated in figure 8.

In the embodiment hereinabove, the selection is based on the CSG. More generally, in other embodiments, further criteria can be taken into consideration for the cell selection and reselection. Some additional criteria are indicated hereinafter.
- Service desired by the UE: this is based on the type of application for which the UE has made a request for.
- Coverage: this depends on the cell type, Macrocell or femtocell
- Ownership: this depends on whether the HNB is privately owned or is public
- Service access priority: this is based on whether the CSG identifier is listed in the UE's whitelist, in this case the member UE get access priority
- CSG membership: being a CSG member allows the UE to camp on the HNB that belongs to the group
- UE speed: As in the original HCS concept
- Bandwidth: this is based on the bandwidth available on the broadband interface of the femtocell for the UE. The UE might then camp on the femtocell offering the highest throughput

These criteria might be taken alone or combined together. In addition, the concept in the present invention can be applied to Node B, eNodeB as well as Home NodeB (HNB) and Home eNodeB (HeNB).

The UE may further comprise a configuring module 30 for configuring the behavior of the cell selection and reselection. The behavior is configured by the end user through the UE user interface 29. Alternatively, this is configured by the network operator. The network operator modifies then the network setting in such a way that the base station (such as UMTS NodeB or Home NodeB (HNB), or LTE eNodeB or Home eNodeB (HeNB)) transmits broadcast information to which the UEs in the coverage area monitor. By changing appropriate parameter values in this broadcast information, UEs capture the change of value and adjust their behavior accordingly.

In the latter case, the same information broadcasted from one base station may have different meanings to different UEs in the coverage area. To put it another way, if a cell A is transmitting an "Access Information", this value can be interpreted by UEs based on each UE's relative priority of this cell with respect to other available cell or cells.

For example, assuming there are 3 cells in the same environment: cell A, B, and C, these cells A, B, and C transmit the Access Information value X, Y, and Z, respectively. The concept of Access Information can also be represented in another way such as Closed Subscriber Group (CSG) as defined in 3GPP specifications such as TS 25.331 standard, version 9.0.0 (2009-09) on 3rd Generation Partnership Project; Technical Specification Group Radio Access Network; Radio Resource Control (RRC); Protocol Specification (Release 9). In particular, if there are 2 UEs, UE M and N, within the coverage area. UE M has Access Information value X as the highest priority, while UE N has Access Information value Y as the highest priority. In this case, cell A, which transmits Access Information value of X, becomes the most preferred cell from the perspective of UE M. However, this same cell is not the most preferred cell from the perspective of UE N. Of course, the mapping of the Access information value and the preference that is determined within the UE can be modified as well in the similar manner described above.

As described hereinabove, one way to define and configure the UE's cell selection and reselection behavior is to associate the cell's unique information, as represented in the above as "Access Information", to a specific Access Priority value. As mentioned, one way to represent this Access Information is to use the concept of CSG as defined in 3GPP 25.331. By having such mapping information within the UE between the Access Information and the Access Priority, an UE can prioritize available cells in the order of this priority value. Further, by having different combination of Access Information and Access Priority among different UEs, different UEs can determine their own unique cell selection and reselection behavior. This behavior is above and beyond the radio physical level information such as signal strength of the radio channel.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A method at a cellular device (3) for reselecting a cell, said cellular device being camped on a first cell corresponding to a cellular technology, said cell enabling said cellular device to access at least one service, said method comprising the step of:
- scanning if another cell corresponding to a same cellular technology is available in the area of the cellular device; and
- if a second cell is available and enables said cellular device to access more services than in first cell, reselecting to said second cell.

2. Method according to claim 1, comprising the step of:
- if a second cell is available, said second cell enables said cellular device to access a same number of services than in first cell and enables said cellular device to access to services quality levels better than in said first cell, reselecting to said second cell.

3. Method according to claim 1, comprising reselecting to a second cell that corresponds to a Closed Subscriber Group to which said cellular device is a member.

4. A method at a cellular device (3) for selecting a cell corresponding to a cellular technology, said cell enabling said cellular device to access at least one service, said method comprising the steps of:
- scanning if a cell is available in the area of the cellular device; and
- if more than one cell are available, selecting to the cell enabling said cellular device to access most services.

5. Method according to claim 4, comprising the step of:
- if more than one cell are available, and enable said cellular device to access a same number of services, selecting to the cell enabling said device to access the best services quality levels.

6. Method according to claim 4 or 5, comprising selecting to the cell that corresponds to a Closed Subscriber Group to which said cellular device is a member.

7. A cellular device comprising a selector (35) adapted to scan if a cell corresponding to a cellular technology is available in the area of the cellular device, said cell enabling said cellular device to access at least one service, and if more than one cell are available, to select the cell enabling said cellular device to access most services.

8. Cellular device according to claim 7, said selector (35) being adapted to, when said cellular device is camped on a first cell, scan if a second cell is available in the area of the cellular device, and if a second cell is available and offers a service quality level higher than the first cell to said cellular device, reselect to said cell.
